(19) Europäisches Patentamt
European Patent Office
Office européen des brevets

(11) **EP 4 436 188 A1**

(12) **EUROPEAN PATENT APPLICATION**
published in accordance with Art. 153(4) EPC

(43) Date of publication:
**25.09.2024 Bulletin 2024/39**

(21) Application number: **22914359.9**

(22) Date of filing: **19.12.2022**

(51) International Patent Classification (IPC):
**H04N 21/43** (2011.01)

(52) Cooperative Patent Classification (CPC):
**G06F 3/14; H04N 5/262; H04N 21/2187;
H04N 21/414; H04N 21/43; H04N 21/4363;
H04N 21/8547**

(86) International application number:
**PCT/CN2022/139980**

(87) International publication number:
**WO 2023/125105 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.12.2021 CN 202111679635**

(71) Applicant: **Huawei Technologies Co., Ltd.**
**Shenzhen, Guangdong 518129 (CN)**

(72) Inventor: **SUN, Wei**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **CROSS-DEVICE SCREEN IMAGE ACQUISITION SYSTEM AND METHOD**

(57) This application provides a system and a method for cross-device screen image capturing, and relates to the field of communication technologies. The system includes a first device and a second device. A first application is installed and a remote screen camera module is disposed on the first device. A camera agent module and a screen capturing module are disposed on the second device. After receiving a first user operation, the first application invokes the remote screen camera module to send a first working instruction to the camera agent module. The camera agent module obtains a screen image of the second device according to the first working instruction with the screen capturing module, and sends the screen image to the remote screen camera module. The remote screen camera module sends the screen image to the first application. According to the technical solutions provided in embodiments of this application, when an electronic device performs cross-device screen image capturing, an additional third-party streaming media application does not need to be installed. This brings good user experience.

FIG. 4

**Description**

This application claims priority to Chinese Patent Application No. 202111679635.5, filed with the China National Intellectual Property Administration on December 31, 2021 and entitled "SYSTEM AND METHOD FOR CROSS-DEVICE SCREEN IMAGE CAPTURING", which is incorporated herein by reference in its entirety.

**TECHNICAL FIELD**

This application relates to the field of communication technologies, and in particular, to a system and a method for cross-device screen image capturing.

**BACKGROUND**

With development of communication technologies, an electronic device can live stream a photographed image and a screen image. Live streaming a screen image includes live streaming a local screen image (local screen live streaming for short) and live streaming a screen image of another device (cross-device screen live streaming for short).
In a process in which an electronic device performs cross-device screen live streaming, for example, in a process in which a first device live streams a game image that is on a screen of a second device, the first device needs to capture a screen image from the second device, and push the screen image to a viewing device for viewers. Currently, only after a third-party streaming media application is installed on the second device, the first device can control, through the streaming media application, the second device to capture a local screen image. It should be understood that when the first device needs to capture a screen image of the second device through different live streaming applications, the second device needs to install streaming media applications respectively corresponding to the plurality of live streaming applications, which not only occupy memory of the second device, but also cause poor user experience.

**SUMMARY**

This application provides a system and a method for cross-device screen image capturing, to resolve a problem in the conventional technology that poor user experience is caused because an additional third-party streaming media application needs to be installed on an electronic device to perform cross-device screen image capturing.
To achieve the foregoing objective, the following technical solutions are used in this application.
According to a first aspect, an embodiment of this application provides a system for cross-device screen image capturing, including a first device and a second device. A first application is installed and a remote screen camera module is disposed on the first device. A camera agent module and a screen capturing module are disposed on the second device. After receiving a first user operation, the first application invokes the remote screen camera module to send a first working instruction to the camera agent module. The camera agent module obtains a screen image of the second device according to the first working instruction with the screen capturing module, and sends the screen image to the remote screen camera module. The remote screen camera module sends the screen image to the first application.
In the system provided in this embodiment of this application, both the remote screen camera module and the camera agent module are preset when the electronic device is delivered from a factory. The second device can capture a local screen image under control of the first device without using a third-party streaming media application, and send the screen image to the first device. This brings good user experience. In addition, when developing an application like a live streaming application, a software developer does not need to accordingly develop a corresponding third-party streaming media application. Therefore, costs and complexity of software development are significantly reduced.
In some embodiments, that the remote screen camera module sends the screen image to the first application includes: The remote screen camera module performs, based on camera stream configuration information of the first application, splitting processing on a screen data stream corresponding to the screen image. The remote screen camera module sends the screen data stream on which splitting processing is performed to the first application.
According to the system provided in this embodiment of this application, the first device may classify screen data streams in advance based on a requirement of the first application, so that subsequent processing on a screen image by the first application can be reduced.
In some embodiments, the camera stream configuration information includes an image width and an image height of the screen image, and/or a data format of the image.
In some embodiments, that the remote screen camera module sends the screen image to the first application includes: The remote screen camera module zooms out or zooms in the screen image to obtain a zoomed-out or zoomed-in image. The remote screen camera module sends the zoomed-out or zoomed-in image to the first application. According to the system provided in this embodiment of this application, the first device may preprocess the size of the screen image based on a requirement of the first application to obtain a screen image in an expected size of the first device, so that subsequent processing on the screen image by the first application can be reduced.

In some embodiments, the first device is further provided with a local camera module. The first application invokes the local camera module after receiving a second user operation. The local camera module captures a photographed image with a camera, and sends the photographed image to the first application. It should be noted that, when the first application invokes the local camera module and the remote screen camera module, a same interface may be used.

In some embodiments, after receiving the screen image, the remote screen camera module updates a timestamp of a first-frame screen image based on a delay of the screen image and a system time of the first device at which the first device completes unpacking of the first-frame screen image.

In some embodiments, the delay of the screen image includes: a delay generated when the second device captures the screen image; a delay generated when the second device performs data packaging on the screen image; a delay of transmitting the screen image from the second device to the first device; and a delay generated when the first device performs data unpacking on the screen image.

In some embodiments, after receiving the screen image, the remote screen camera module re-determines a timestamp of a screen image of an $n^{th}$ frame based on an updated timestamp of the first-frame screen image, a capturing timestamp of the screen image of the $n^{th}$ frame on the second device, and a capturing timestamp of the first-frame screen image on the second device, where n is a positive integer and $n \neq 1$.

By updating the timestamps of the screen images (including the first-frame screen image and the non-first-frame screen image), a timestamp difference between a local photographed image and a remote screen image caused by a clock system difference can be reduced.

In some embodiments, the first device is further provided with a camera service. The remote screen camera module sends the screen image to the first application by using the camera service, and the local camera module sends the photographed image to the first application by using the camera service. The camera service determines a time difference between arrival of the screen image at the camera service and arrival of the photographed image at the camera service, and an image that first arrives at the camera service; and sends the screen image and the photographed image to the first application based on the time difference and the image that first arrives at the camera service. In this embodiment, the camera service may send images with a same timestamp to the first application together. After receiving the screen image and the photographed image, the first application may directly perform processing such as image synthesis on the screen image and the photographed image, and does not need to identify the timestamps of the screen image and the photographed image.

In some embodiments, that the camera service sends the screen image and the photographed image to the first application based on the time difference and the image that first arrives at the camera service includes: If the photographed image arrives at the camera service earlier than the screen image, the camera service delays sending of the photographed image to the first application by the time difference; and/or if the screen image arrives at the camera service earlier than the photographed image, the camera service delays sending of the screen image to the first application by the time difference.

In some embodiments, the time difference between arrival of the screen image at the camera service and arrival of the photographed image at the camera service is a difference between first duration and second duration. The first duration is duration from obtaining of the screen image by the second device to sending of the screen image to the camera service, and the second duration is duration from obtaining of the photographed image by the local camera module to sending of the photographed image to the camera service.

In some embodiments, after receiving a third user operation, the first application invokes the remote screen camera module to send a third working instruction to the camera agent module, where the third working instruction is used to indicate the camera agent module to stop capturing the screen image.

According to a second aspect, an embodiment of this application provides a method for cross-device screen image capturing, applied to a first device and a second device. A first application is installed and a remote screen camera module is disposed on the first device. A camera agent module and a screen capturing module are disposed on the second device. After receiving a first user operation, the first application invokes the remote screen camera module to send a first working instruction to the camera agent module. The camera agent module obtains a screen image of the second device according to the first working instruction with the screen capturing module, and sends the screen image to the remote screen camera module. The remote screen camera module sends the screen image to the first application.

In some embodiments, that the remote screen camera module sends the screen image to the first application includes: The remote screen camera module performs, based on camera stream configuration information of the first application, splitting processing on a screen data stream corresponding to the screen image, and sends the screen data stream on which splitting processing is performed to the first application.

In some embodiments, the camera stream configuration information includes an image width and an image height of the screen image, and/or a data format of the image.

In some embodiments, that the remote screen camera module sends the screen image to the first application includes: The remote screen camera module zooms out or zooms in the screen image to obtain a zoomed-out or zoomed-in image, and sends the zoomed-out or zoomed-in image to the first application.

In some embodiments, the first device is further provided with a local camera module. The method further includes: The first application invokes the local camera module after receiving a second user operation. The local camera module captures a photographed image with a camera, and sends the photographed image to the first application.

In some embodiments, the method further includes: After receiving the screen image, the remote screen camera module updates a timestamp of a first-frame screen image based on a delay of the screen image and a system time of the first device at which the first device completes unpacking of the first-frame screen image.

In some embodiments, the delay of the screen image includes: a delay generated when the second device captures the screen image; a delay generated when the second device performs data packaging on the screen image; a delay of transmitting the screen image from the second device to the first device; and a delay generated when the first device performs data unpacking on the screen image.

In some embodiments, the method further includes: After receiving the screen image, the remote screen camera module re-determines a timestamp of a screen image of an $n^{th}$ frame based on an updated timestamp of the first-frame screen image, a capturing timestamp of the screen image of the $n^{th}$ frame on the second device, and a capturing timestamp of the first-frame screen image on the second device, where n is a positive integer and $n \neq 1$.

In some embodiments, the first device is further provided with a camera service. The remote screen camera module sends the screen image to the first application by using the camera service, and the local camera module sends the photographed image to the first application by using the camera service.

Based on this, the method further includes: The camera service determines a time difference between arrival of the screen image at the camera service and arrival of the photographed image at the camera service, and an image that first arrives at the camera service. The camera service sends the screen image and the photographed image to the first application based on the time difference and the image that first arrives at the camera service.

In some embodiments, that the camera service sends the screen image and the photographed image to the first application based on the time difference and the image that first arrives at the camera service includes: If the photographed image arrives at the camera service earlier than the screen image, the camera service delays sending of the photographed image to the first application by the time difference; and/or if the screen image arrives at the camera service earlier than the photographed image, the camera service delays sending of the screen image to the first application by the time difference.

In some embodiments, the time difference between arrival of the screen image at the camera service and arrival of the photographed image at the camera service is a difference between first duration and second duration. The first duration is duration from obtaining of the screen image by the second device to sending of the screen image to the camera service, and the second duration is duration from obtaining of the photographed image by the local camera module to sending of the photographed image to the camera service.

In some embodiments, the method further includes: After receiving a third user operation, the first application invokes the remote screen camera module to send a third working instruction to the camera agent module, where the third working instruction is used to indicate the camera agent module to stop capturing the screen image.

It may be understood that, for beneficial effects of the second aspect, refer to the related descriptions in the first aspect. Details are not described herein again.

**BRIEF DESCRIPTION OF DRAWINGS**

FIG. 1 is a schematic diagram of a structure of a cross-screen live streaming system according to an embodiment of this application;
FIG. 2 is a schematic diagram of a screen image capturing process according to an embodiment of this application;
FIG. 3 is a schematic diagram of a structure of an electronic device according to an embodiment of this application;
FIG. 4 is a schematic diagram of a software structure of a system for cross-device screen image capturing according to an embodiment of this application;
FIG. 5A and FIG. 5B are a flowchart of a method for cross-device screen image capturing according to an embodiment of this application;
FIG. 6(a) to FIG. 6(e) are a schematic diagram 1 of controlling an electronic device by a user in a live streaming process according to an embodiment of this application;
FIG. 7A and FIG. 7B are a schematic flowchart of multi-camera data collection according to an embodiment of this application;
FIG. 8 is a schematic diagram 2 of controlling an electronic device by a user in a live streaming process according to an embodiment of this application;

FIG. 9 is a schematic diagram of a delay in a screen image capturing process according to an embodiment of this application;

FIG. 10 is a schematic diagram of processing, by a system for cross-device screen image capturing, on data streams captured by different cameras according to an embodiment of this application;

FIG. 11A is a schematic diagram 1 of a synthesized image according to an embodiment of this application;

FIG. 11B is a schematic diagram 2 of a synthesized image according to an embodiment of this application; and

FIG. 12 is a schematic diagram of a structure of a chip according to an embodiment of this application.

## DESCRIPTION OF EMBODIMENTS

The following describes technical solutions provided in embodiments of this application with reference to accompanying drawings.

It should be understood that, in the descriptions of embodiments of this application,"/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists.

In the embodiments, the terms "first" and "second" are merely intended for description, and shall not be understood as an indication or implication of relative importance or implicit indication of a quantity of indicated technical features. Therefore, a feature limited by "first" or "second" may explicitly or implicitly include one or more such features. In descriptions of the embodiments, unless otherwise specified, "a plurality of" means two or more than two.

With development of communication technologies, a user (for example, a streamer) may share what is happening around through live streaming by using an electronic device, for example, a commodity sales process, a food tasting process, an entertainment process (for example, a gaming process), and a teaching process, which concern various aspects of life. Currently, a form of live streaming includes live streaming through shooting and screen live streaming. In a process of live streaming through shooting, the electronic device shares, through live streaming with viewers, content (for example, a commodity sales process or a food tasting process) shot by a local camera application or a camera application of another electronic device. However, in screen live streaming, the electronic device shares, through live streaming with viewers, content (for example, a game process) displayed on a local screen or a screen of another electronic device.

It should be noted that, in this embodiment, the electronic device may be a mobile phone (mobile phone), a tablet computer (Pad), a computer with a wireless transceiver function, a smart television, a projector, a wearable device (like a smartwatch), a device with a video shooting function, an in-vehicle device, an augmented reality (augmented reality, AR)/virtual reality (virtual reality, VR) device, an ultra-mobile personal computer (ultra-mobile personal computer, UMPC), a netbook, a personal digital assistant (personal digital assistant, PDA), or the like. A type of the electronic device is not specifically limited in this embodiment of this application.

In this embodiment, a process in which an electronic device (for example, a first device) live streams a screen image of another electronic device (for example, a second device) is referred to as cross-device screen live streaming, which is referred to as cross-screen live streaming for short.

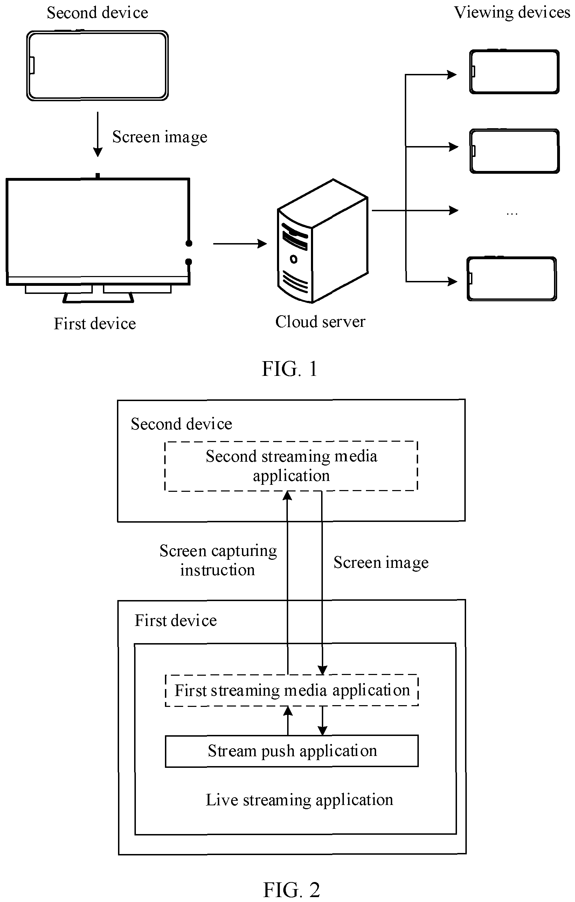

FIG. 1 is a schematic diagram of a structure of a cross-screen live streaming system according to an embodiment of this application. The system includes a first device, a second device, a cloud server, and a viewing device. In a cross-screen live streaming process, the second device is configured to display a screen image, for example, display a game image in a process of live streaming a game. Therefore, the second device may also be referred to as a screen source device. The first device is configured to: obtain a screen image displayed by the second device, process the screen image to form a live video stream after obtaining the screen image, and push the live video stream to a cloud server corresponding to a live streaming application (application, App). Therefore, the first device may also be referred to as a stream push device. Processing performed by the second device on the screen image may include: adding a streamer image, a streamer sound, live streaming prompt information, and the like to the screen image. The cloud server is configured to send the live video stream to the viewing device. The viewing device is configured to: receive the live video stream pushed by the cloud server, and display a live image based on the live video stream for viewers.

In a cross-screen live streaming process, a commonly used screen image capturing technology is a streaming media technology, that is, the first device and the second device implement cross-device screen image capturing based on a streaming media application. The following describes the method in detail.

FIG. 2 is a schematic diagram of a screen image capturing process according to an embodiment of this application. Refer to FIG. 2. A live streaming application is installed on a first device, and the live streaming application usually includes a first streaming media application and a stream push application. A second streaming media application, for example, a "live streaming assistant", is installed on the second device, and the second streaming media application usually needs to be installed by a user specifically for the second device. After establishing a wireless connection, the first device and the second device communicate with each other through the first streaming media application and the second streaming media application, to obtain a screen image of the second device. For example, the first streaming media application sends a capturing instruction to the second device in response to a user operation. The second streaming media application needs to control, according to the capturing instruction, the second device to capture a screen image, and send a captured screen image to the first streaming media application. After receiving the screen image, the first streaming media application sends the screen image to the stream push application.

Based on the foregoing descriptions, it can be learned that, only after a third-party streaming media application is installed on the second device, the first device can control, through the streaming media application, the second device to capture a local screen image. It should be understood that when the first device needs to capture a screen image of the second device through different live streaming applications, the second device needs to install streaming media applications respectively corresponding to the plurality of live streaming applications, which not only occupy memory of the second device, but also cause poor user experience. For example, when the first device needs to capture a screen image of the second device in different time periods through a live streaming application 1 and a live streaming application 2, the second device not only needs to install a third-party streaming media application 1 on the live streaming application 1, but also needs to install a third-party streaming media application 2 on the live streaming application 2, which not only occupy memory of the second device, but also cause great inconvenience to a user.

In addition, when developing a live streaming application, a software developer further needs to develop a specific third-party streaming media application for the live streaming application. Software development costs are relatively high because the third-party streaming media application not only needs to control the second device to capture a screen image, but also needs to ensure fast and stable transmission of the screen image. For example, when developing the live streaming application 1, a software developer further needs to develop the third-party streaming media application 1. When developing the live streaming application 2, the software developer further needs to develop the third-party streaming media application 2.

Therefore, an embodiment of this application provides a system for cross-device screen image capturing. According to the technical solution provided in this embodiment, a second device can capture a screen image according to an instruction of a first device without using a third-party streaming media application, and send the screen image to the first device. This brings good user experience. In addition, when developing a live streaming application, a software developer does not need to develop a corresponding third-party streaming media application. Therefore, complexity of software development is reduced.

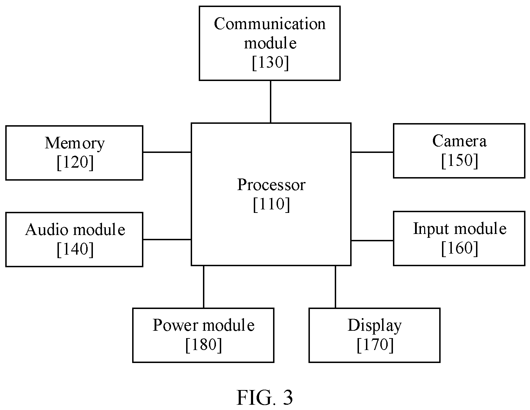

FIG. 3 is a schematic diagram of a structure of an electronic device according to an embodiment of this application. The electronic device may include a processor 110, a memory 120, a communication module 130, an audio module 140, a camera 150, an input module 160, a display 170, a power module 180, and the like.

The processor 110 may include one or more processing units. For example, the processor 110 may include an application processor (application processor, AP), a modem (Modem) processor, a graphics processing unit (graphics processing unit, GPU), an image signal processor (image signal processor, ISP), a controller, a memory, a video codec, and the like. Different processing units may be independent components, or may be integrated into one or more processors.

The memory 120 is configured to store a software program and a module. The processor 110 performs various function applications of the electronic device and data processing by running the software program and the module that are stored in the memory 120. The memory 120 may mainly include a program storage area and a data storage area. The program storage area may store an operating system, an application required by at least one function (like a screen image capturing function, a photographing function, a video shooting function, a sound playing function, and an image playing function), and the like. The data storage area may store data (such as a photographed photo, a shot video, audio data, and a phone book) and the like created during use of the electronic device. In addition, the memory 120 may include a high-speed random access memory, or may further include a non-volatile memory, such as at least one magnetic disk storage device, a flash memory device, or another volatile solid-state storage device. The memory 120 may be an internal memory or may be an external memory (for example, a Micro SD card).

The communication module 130 includes a wireless communication module. The wireless communication module may provide a solution that is applied to the electronic device and that is for wireless communication including a wireless local area network (wireless local area network, WLAN) (for example, a wireless fidelity (wireless fidelity, Wi-Fi) network), Wi-Fi direct (peer to peer, P2P), Bluetooth (Bluetooth, BT), a near field communication (near field communication, NFC) technology, and the like. The wireless communication module may use any communication standard or protocol, including but not limited to a global system of mobile communication (global system of mobile communication, GSM), a general packet radio service (general packet radio service, GPRS), code division multiple access (code division multiple access, CDMA), wideband code division multiple access (wideband code division multiple access, WCDMA), and long term evolution (long term evolution, LTE).

In some embodiments, for example, when the electronic device is a mobile phone, the communication module 130 further includes a mobile communication module. The mobile communication module may provide a solution that is applied to the electronic device and that is for wireless communication such as 2G, 3G, 4G, and 5G communication.

The audio module 140 is configured to implement functions such as audio capturing and audio playing. The audio module 140 can convert an audio electrical signal into a sound signal, for example, convert the signal in a process of listening to music or answering a hands-free call. The audio module 140 can convert a sound signal into an audio electrical signal. For example, when a user makes a call or sends voice information, a sound signal of the user is captured, and the sound signal is stored or sent in a form of an audio electrical signal.

The camera 150 is configured to capture a photo, a video, and the like. The electronic device may include one or more cameras 150. The cameras 150 can implement a photographing or video shooting function by cooperating with an ISP, a video codec, a GPU, the display 170, an application processor, and the like.

The input module 160 may be configured to: receive input digit or character information, and generate a signal input related to a user setting and function control of the electronic device. Specifically, the input unit may include a touch panel and another input device. The touch panel is also referred to as a touchscreen and can collect a touch operation performed by a user on or near the touch panel (for example, an operation performed by the user on or near the touch panel by using any appropriate object or accessory, for example, a finger or a stylus), and drive a corresponding connected apparatus based on a preset program. In addition to the touch panel, the input unit 130 may include another input device, including but not limited to one or more of a physical keyboard, a function button (for example, a volume control button or an on/off button), a trackball, a mouse, a joystick, and the like.

The display 170 is configured to display an image, including a picture, a video, a website, a character, and the like. Optionally, the display 170 may be a liquid crystal display (liquid crystal display, LCD), an organic light-emitting diode (organic light-emitting diode, OLED) display, or the like. In some embodiments, the terminal device may include one or N displays 170, where N is a positive integer greater than 2. By using the GPU, the display 170, the application processor, and the like, the terminal device implements a display function like displaying an image or a video. The GPU is a microprocessor for image processing, and is connected to the display 170 and the application processor. The GPU is configured to: perform mathematical and geometric calculation, and perform image rendering. The processor 110 may include one or more GPUs that execute related program instructions to generate or change display information.

The power module 180 includes a battery and a charging apparatus. The charging apparatus is configured to receive a charging input from a charger, and store power in a battery. The charger may be a wireless charger or a wired charger. The power module 180 provides power for components such as the processor 110, the memory 120, the communication module 130, the audio module 140, the camera 150, the input module 160, and the display 170.

It may be understood that the structure shown in this embodiment of this application does not constitute a specific limitation on the electronic device. In some other embodiments of this application, the electronic device may include more or fewer components than those shown in the structure in the figure, or some components may be combined, or some components may be split, or there may be a different component arrangement. The components shown in the figure may be implemented by using hardware, software, and a combination of software and hardware.

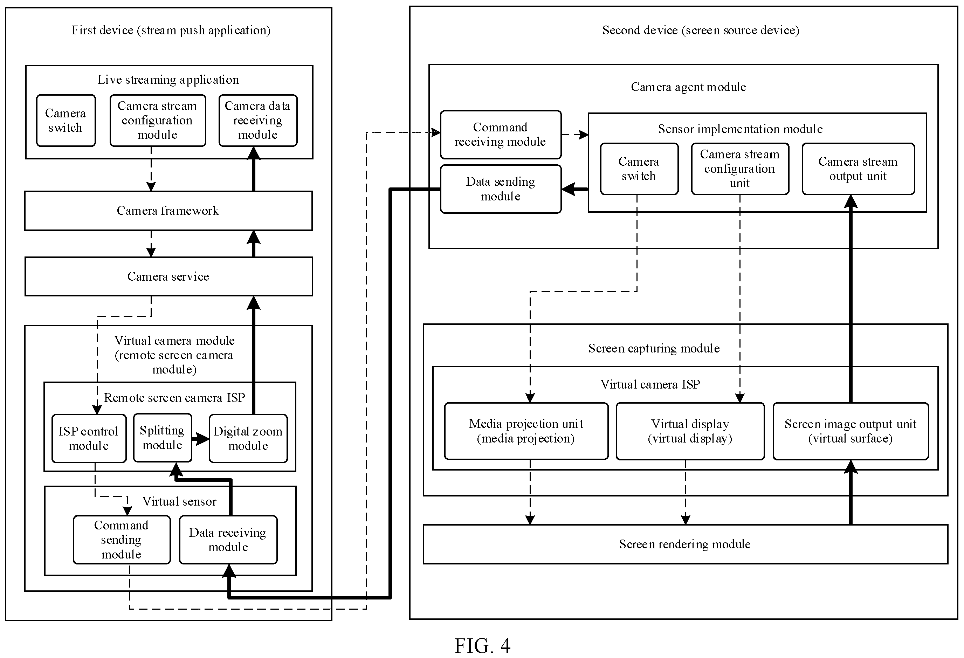

FIG. 4 is a schematic diagram of a software structure of a system for cross-device screen image capturing according to an embodiment of this application. Refer to FIG. 4. The system includes a first device and a second device. The first device and the second device may interact or connect to each other by using communication technologies such as a Wi-Fi local area network, a Wi-Fi direct (peer to peer, P2P), Bluetooth (Bluetooth, BT), or cellular communication. The following separately describes software structures of the first device and the second device.

(First) First device

The first device is also referred to as a stream push device, is installed with a live streaming application, and is provided with a camera framework, a camera service, and a virtual camera module (also referred to as a remote screen camera module). The following separately describes the live streaming application, the camera framework, the camera service, and the virtual camera module.

(1) Live streaming application

The live streaming application is installed at an application layer of the first device, and is configured to control the first device to capture a live streaming video stream for live streaming. The live streaming application usually includes a camera switch, a camera stream configuration module, and a camera data receiving module.

The camera switch is configured to enable or disable a camera module of the first device according to a user instruction. The camera module may be a local front-facing camera module or a local rear-facing camera module of the first device, a front-facing camera module or a rear-facing camera module of a remote device (for example, a second device) connected to the first device, or the remote screen camera module provided in this embodiment. The remote screen camera module is configured to control a remote device (for example, the second device) to capture a screen image of the remote device. In this embodiment, the user instruction may be a touch control instruction input by the user on the display 170 of the electronic device, or may be an air gesture, a speech control instruction, or the like. A specific implementation form of the user instruction is not limited in this embodiment.

It should be noted that, in a case in which control is performed to enable one camera module, the camera switch supports enabling of another camera module according to a user instruction, so that the first device simultaneously uses a plurality of camera modules to capture images. For example, when control is performed to enable the local front-facing camera module of the first device, the first device is controlled to enable the rear-facing camera module of the second device. Alternatively, when control is performed to enable the local rear-facing camera module of the first device, the remote screen camera module is enabled to capture a screen image of the second device.

In addition, when the first device simultaneously enables the plurality of camera modules, the camera switch supports simultaneously disabling the plurality of camera modules, or supports disabling only any of the plurality of camera modules. For example, when the first device uses both the local front-facing camera module and the remote screen camera module to capture an image, the first device may control, with the camera switch, the front-facing camera module and the remote screen camera module to be disabled simultaneously, or may control only the front-facing camera module to be disabled, or control only the remote screen camera module to be disabled.

A camera stream configuration module is configured to configure a camera data stream, including configuring parameters such as a height (height), a width (width), and a data format of an image captured by the camera.

When capturing an image, the first device may capture a plurality of data streams. Descriptions are provided as an example in the following.

For example, the first device uses a camera to shoot a video. In a video shooting process, the first device usually needs to capture a preview data stream and a video data stream, and may further capture a snapshot data stream. In this example, the preview data stream is a data stream corresponding to a preview image that is displayed in an image preview box in real time before the camera shoots a video or in a video shooting process. The preview data stream is usually deleted by the electronic device after shooting ends. The video data stream is a data stream captured by the electronic device and stored on the electronic device, and is a final data stream needed by a user. Definition of the video data stream is usually higher than that of the preview data stream. In a video shooting process, the user may further control the electronic device to take snapshots of some images in the video, and save the images in a picture form. A snapshot data stream is a data stream corresponding to the images.

For example, the first device uses the camera to take a photo. The first device usually needs to capture a preview data stream and a photo data stream. In this example, the preview data stream is a data stream corresponding to a preview image that is displayed in an image preview box in real time after a camera application is started and before the photo is taken. The preview data stream is usually deleted by the first device after shooting ends. The photo data stream is a data stream corresponding to a photo captured by the first device after receiving a photographing instruction of the user.

In this embodiment, the first device allows a camera client or an application (for example, a live streaming application) that supports invocation of the camera module to configure a data stream of the camera for a specific use scenario. For example, the electronic device configures definition of an image in the data stream. Because definition of the preview data stream is usually lower than definition of the photo data stream, the first device may configure the definition of the preview data stream to 480P, and configure the definition of the photo data stream to 1080P.

A camera data receiving module is configured to receive a data stream sent by every camera module controlled by the first device. It can be learned from the foregoing descriptions that the camera module may be the local front-facing camera module or rear-facing camera module of the first device, or may be the front-facing camera module or the rear-facing camera module of the remote device (for example, the second device) controlled by the first device, or may be the remote screen camera module.

For example, the first device controls only the local front-facing camera module to capture an image. The camera data receiving module needs to receive a data stream captured by the front-facing camera module. For example, the first device controls both the local front-facing camera module and the remote screen camera module of the first device to capture images. The camera data receiving module needs to receive both a data stream sent by the front-facing camera module and a data stream sent by the remote screen camera module. After receiving the data, the camera data receiving module sends the data to another module of the live streaming application for further processing, for example, performing image synthesis, displaying an image, or pushing the data as a live streaming video stream to a viewing device.

(2) Camera framework

The camera framework may be disposed at an application framework layer of the first device, and is configured to provide a camera API. With the camera API, the first device may invoke a local camera module, a remote camera module, the remote screen camera module, and the like. In other words, with the camera API, the first device may invoke a corresponding camera software development kit (software development kit, SDK) to implement an image shooting function. For example, the first device may invoke, with the camera API, an SDK for controlling remote screen capturing, to control a remote device (for example, the second device) to capture a screen image and send the screen image to the first device.

(3) Camera service

The camera service may be disposed at a system runtime library layer of the first device, and is configured to manage a usage status of a camera module used by an application, that is, to provide, for different applications at different times, a capability of obtaining an image by using a camera module. For example, both a live streaming application and an instant chat application at the application layer of the first device can use the remote screen camera module to obtain a screen image of a remote device (for example, the second device).
In some embodiments, the camera framework may be included in the camera service. In other words, the camera service can not only provide an API interface of the camera module, but also manage a usage status of the camera module used by an application.

(4) Remote screen camera module

The remote screen camera module may also be referred to as a virtual camera module, may be disposed at a hardware abstraction layer of the first device, and is configured to capture a screen image of a remote device (for example, the second device). For example, the remote device is the second device, and the remote screen camera module is configured to control capturing of a screen image of the second device. In this embodiment, the remote screen camera module includes a remote screen camera module image signal processor (image signal processor, ISP) and a virtual sensor.
In an example, a remote screen camera module ISP includes an ISP control module, a splitting module, and a digital zoom module.
The ISP control module is configured to: invoke, according to a first interface invocation instruction sent by the camera switch, the second device to capture a screen image; control, according to a first interface disabling instruction sent by the camera switch, the second device to stop capturing a screen image; and configure, based on camera stream configuration information sent by the camera stream configuration module, the splitting module to work. The camera stream configuration information is a related parameter for capturing a screen image by the second device.
The splitting module is configured to: after receiving a data stream of the screen image sent by the remote device (for example, the second device), perform splitting processing on the data stream based on camera stream configuration information. For example, a data stream is split into a preview data stream, a photo data stream, or the like based on an image width, an image height, or an image data format in the camera stream configuration information.
The digital zoom module is configured to zoom in a captured screen image. Digital zoom is actually an electronic image zoom-in or zoom-out technology and is used to zoom in or zoom out a small image sent by a remote device to a target size. For example, a picture with a resolution of 640*480 (that is, 480P) is zoomed in to a picture with a resolution of 2048*1536 (that is, 2048P), or an image with a resolution of 1920*1080 (that is, 1080P) is zoomed out to a picture of 640*480.
The virtual sensor, also referred to as a soft sensor (sensor), includes a command sending module and a data receiving module. The command sending module is configured to send a first working instruction, a second working instruction, and camera stream configuration information to the second device. The first working instruction is configured to control the second device to capture a screen image. The second working instruction is configured to control the second device to stop capturing a screen image. The data receiving module is configured to receive a screen image captured by the first device, and send the screen image to the splitting module.

(Second) Second device

A camera agent module, a screen capturing module, and a screen rendering module are installed on the second device. The second device can capture a local screen image according to the first working instruction of the first device, and send the screen image to the first device. The following describes each module in the second device in detail.

(1) Camera agent module

The camera agent module may be disposed at an application layer of the second device, and includes a command receiving module, a sensor implementation module, and a data sending module.
The command receiving module is configured to receive an instruction or information sent by the first device, where the instruction or information includes the first working instruction, the second working instruction, the camera stream configuration information, and the like that are mentioned above.

The sensor implementation module, also referred to as a camera sensor implementation, includes a camera switch, a camera stream configuration unit, and a camera stream output unit. The camera switch is configured to: control, according to the first working instruction, the screen capturing module to work, and capture a screen image of the second device; and control, according to the second working instruction sent by the first device, the screen capturing module to stop working. The camera stream configuration unit is configured to control, based on the camera stream configuration information sent by the first device, a specification like a resolution or a size of a screen image captured by the screen capturing module. The camera stream outputting unit is configured to receive the screen data stream sent by the screen capturing module, and send the screen data stream to the data sending module.

The data sending module is configured to send, to the first device, a screen data stream locally captured by the second device, where the screen data stream includes related data of a screen image.

(2) Screen capturing module

The screen capturing module may be disposed at a system runtime library layer, and can take a screenshot or perform screen recording on a screen image of the second device. Taking a screenshot refers to capturing a screen image of a single frame. Screen recording refers to recording a plurality of frames of screen images that are continuously displayed within a preset period. It should be noted that, in the technical solution provided in this embodiment, the second device virtualizes a screen image capturing function originally disposed in a system of the second device into a camera shooting function, that is, invokes, with an application programming interface (application programming interface, API) of the camera module, the screen capturing module originally disposed in the second device to capture a screen image of the second device.

The screen capturing module includes a media projection (Media Projection) unit, a virtual display (Virtual Display), and a screen image output unit (virtual Surface).

The media projection (Media Projection) unit is configured to capture a screen image, and specifically, may capture a current screen image and record a screen video. After obtaining the first working instruction sent by the camera switch, the media projection unit usually controls the first device to display a pop-up window to ask a user whether to authorize an application to capture the screen image. After obtaining authorization of the user, the media projection unit starts to capture the screen image of the second device.

The media projection unit is a unit controlled by the camera switch in the camera agent module. In other words, the camera switch controls the media projection unit to create and destroy a screen media projection.

For example, the camera switch may control, by using the following program, the media projection unit to create a screen media projection.

```
public Status CameraSensor::open() {
        MediaProjectionManager projection Manager =
        (MediaProjectionManager).getSystemService(Context.MEDIAPROJECTIONSER
 VICE);
        // Create screen media projection MediaProjection
        mMediaProj ection=proj ectionManager.getMediaProj ection(mResultCode,
 mResultData);
        return OK;
        1
```

In a process of destroying a media projection object, the camera switch may first control the media projection unit to stop screen media projection, then empty Media Projection, and finally release the media projection object by using a Java collection mechanism.

For example, the camera switch may control, by using the following program, the media projection unit to destroy the media projection object.

```
public Status CameraSensor::close() {
        //First stop screen media projection MediaProjection
        mMediaProj ection. stop();
        //Then empty MediaProjection, and release a MediaProjection object by using a Java
 collection mechanism
        mMediaProj ection = null;
        return OK;
        1
```

The virtual display (Virtual Display) is used to render a screen image obtained by a screen media projection unit on a Surface control. When the process ends, the virtual display is automatically released. The virtual display determines parameters such as a size (like a screen width screen Width and screen height screen Height) and dpi of a virtual display screen based on configuration of the camera stream configuration unit in the camera agent module.

In some embodiments, the camera stream configuration unit configures the size of the virtual screen by using the following program.

```
public List<Size> CameraSensor::getSupportedOutputSizes() {
        // Obtain a screen width and screen height
        DisplayMetrics metrics = new DisplayMetrics();
        getWindowManager().getDefaultDisplay().getMetrics(metrics);
        int screen Width = metrics.widthPixels;
        int screenHeight = metrics.heightPixels;
        // Create an output size list
        List<Size> sizes = new ArrayList<>();
        sizes.add(new Size(screenWidth, screenHeight));
        return sizes;
        1
```

In some other embodiments, the camera stream configuration unit configures a camera stream of the virtual display by using the following program, and creates an ImageReader (image reader) for receiving to-be-displayed screen data and creating virtual display.

```
public Status CameraSensor::configStreams (Size outputSize) {
        // Obtain screen dpi
        DisplayMetrics metrics = new DisplayMetrics();
        getWindowManager().getDefaultDisplay().getMetrics(metrics);
        densityDpi = metrics.densityDpi;
        // Create ImageReader to receive screen data
        mImageReader=ImageReader.newInstance(outputSize.width,outputSize.height,PixelF
 ormat.RGBA_8888, 1000);
        imageReader.setOnImageAvailableListener(mImageAvailableListener, handler);
        // Create virtual display
        mVirtualDisplay=mMediaProj ection. create VirtualDisplay("VirtualCamera",outputSiz
 e.width,
        outputSize.height,densityDpi,DisplayManager.VIRTUAL_DISPLAY_FLAG_AUTO
        _MIRROR,
        ImageReader.getSurface(), null, null);
        return OK;
        1
```

In some other embodiments, the camera stream configuration unit configures the virtual display to release a camera stream by using the following program.

```
        public Status CameraSensor: :releaseStreams (Size outputSize) {
        if(mVirtualDisplay != null) {
        mVirtualDisplay.release();
        mVirtualDisplay= null;
        }
        return OK;
        1
```

The screen image output unit (virtual surface) is configured to output a captured screen data stream to the camera stream output unit. During an output process, camera data output callback needs to be registered first. Camera data output callback can be performed only after registration succeeds. Camera data output callback means that the camera stream output unit obtains the screen image of the second device through a callback interface in the screen image output unit.

(a) A program related to camera data output callback registration may be shown as follows.

```
public void CameraSensor::setFrameCallback (FrameCallback callback) {
        mFrameCallback = callback;
```

(b) A program related to camera data output callback may be shown as follows.

After the second device creates VirtualDisplay, the virtual surface (that is, surface of ImageReader) starts to output the screen data stream.

```
mImageAvailableListener = new ImageReader.OnImageAvailableListener() {
@Override public void onImageAvailable(ImageReader reader) {
// Obtain a frame of screenshot
Image image = reader.acquireNextImage();
// Invoke camera sensor callback to output a frame of data
mFrameCallback.OnNewFrame(image);
// Close the image after use
image.close();
}
};
```

(3) Screen rendering module

An image displayed by the electronic device usually includes images at a plurality of layers. For example, in a process of playing a video by the electronic device, video content belongs to one layer, and a video control belongs to another layer. The screen rendering module can render images that are of different layers and that are obtained by the media projection unit, to form a final image presented to the user.

It should be noted that, in this embodiment, the camera framework, the camera service, and the remote screen camera module are preset in a system before the first device is delivered from a factory. The camera agent module, the screen capturing module, and the screen rendering module are preset in a system before the second device is delivered from a factory. In other words, a virtual camera application (or referred to as a remote screen camera application) provided by these modules in cooperation is an application pre-installed before delivery of the electronic device, and does not need to be downloaded by the user.

In addition, when the electronic device is delivered from the factory, the camera framework, the camera service, and the remote screen camera module may be preset, and the camera agent module, the screen capturing module, and the screen rendering module may also be preset. In other words, a same electronic device may be used as a screen image provider in some use scenarios, and may be used as a screen image demander in other use scenarios.

Based on the foregoing schematic diagram of the software structure of the system for cross-device screen image capturing provided in this embodiment, the following describes an example of a process in which a first device controls a second device to capture a screen image of the second device.

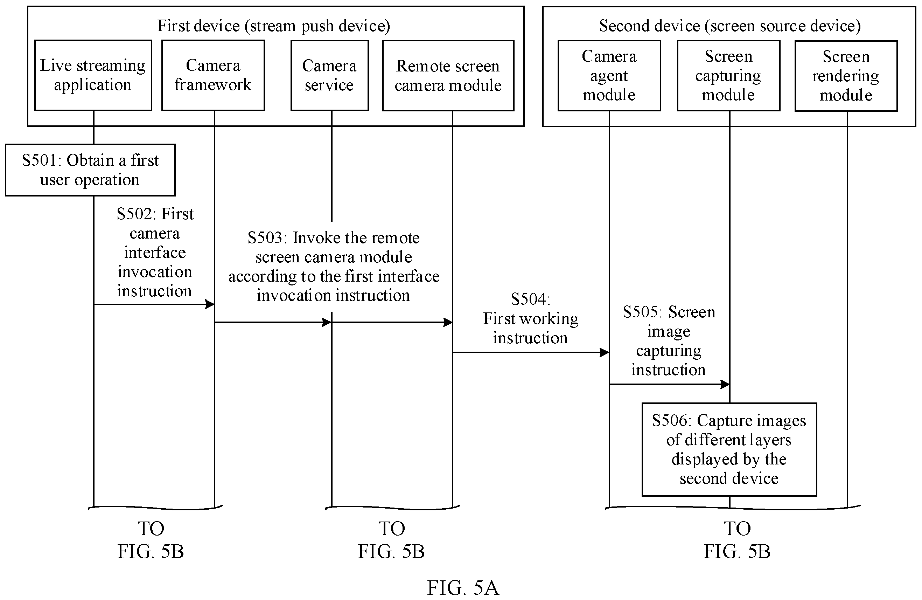

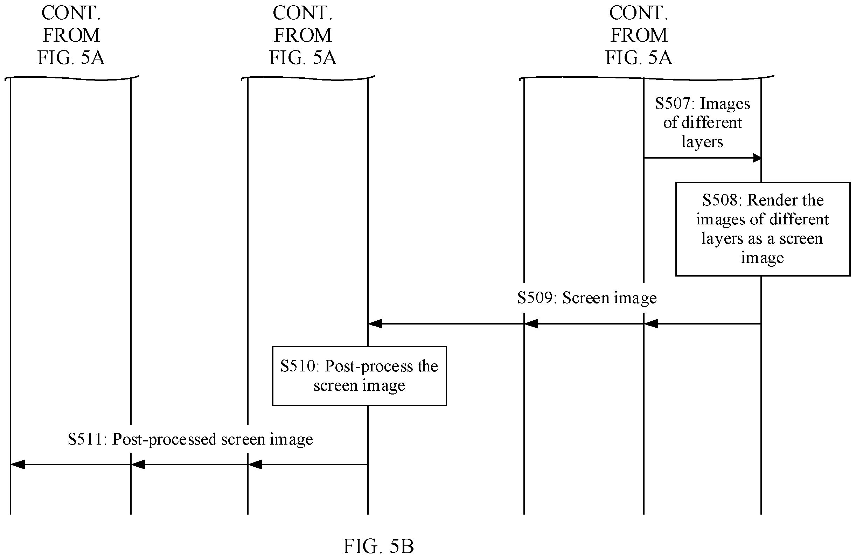

FIG. 5A and FIG. 5B are a schematic diagram of a method for cross-device screen image capturing according to an embodiment of this application, and relates to a process in which a first device obtains a screen image of a second device by using a remote screen camera module. Specifically, the following steps S501 to S511 are included.

S501: A live streaming application obtains a first user operation.

A live streaming scenario is used as an example. In a process in which the first device performs live streaming by using a live streaming application, the live streaming application may select or switch, based on a user operation, a camera used in live streaming, to switch a live streaming image. Based on this, in this embodiment, an operation of controlling, by a user, the live streaming application to capture the screen image of the second device is a second user operation. Details are as follows.

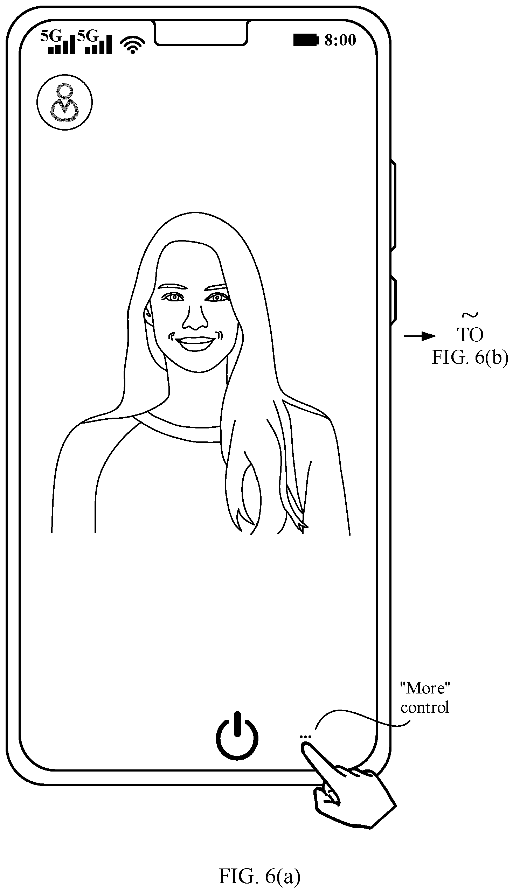

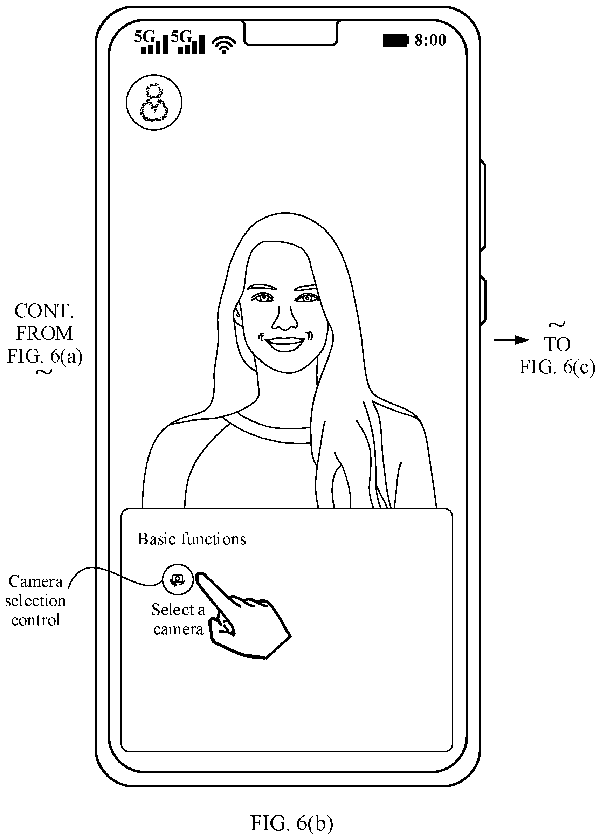

Refer to FIG. 6(a) and FIG. 6(b). During live streaming, in response to an operation of the user on a "More" control on a live streaming interface, the first device displays a basic function selection interface, where the basic function selection interface includes a camera selection control. In addition, the basic function selection interface may further include other controls, such as a live streaming management control and a function setting control, which are not shown in this embodiment.

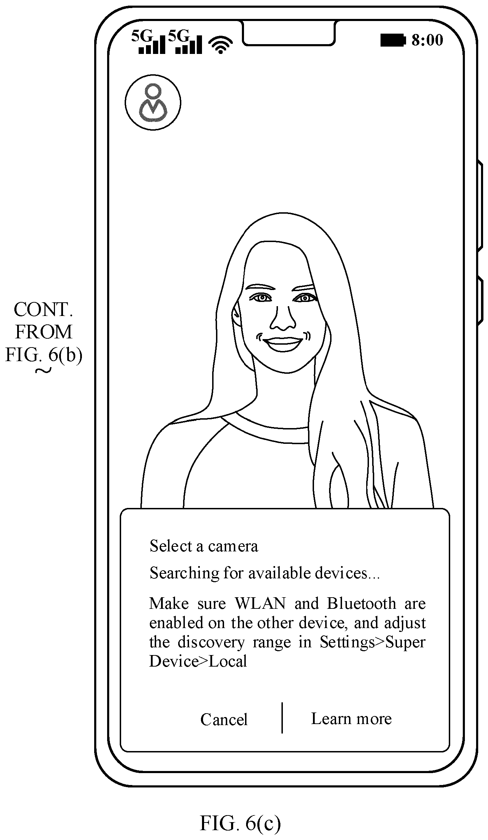

Refer to FIG. 6(b) and FIG. 6(c). In response to an operation performed by the user on the camera selection control, the first device starts to search for an ambient available device. The available device includes an ambient electronic device that supports providing a remote camera service to the first device, that is, a device that supports invocation of a local camera or a screen capturing function by another device. After obtaining authorization of the available device, the first device may display a camera list including available cameras of the available device. For a related authorization procedure of the available device, refer to a current authorization procedure of a distributed camera. Details are not described herein in this embodiment.

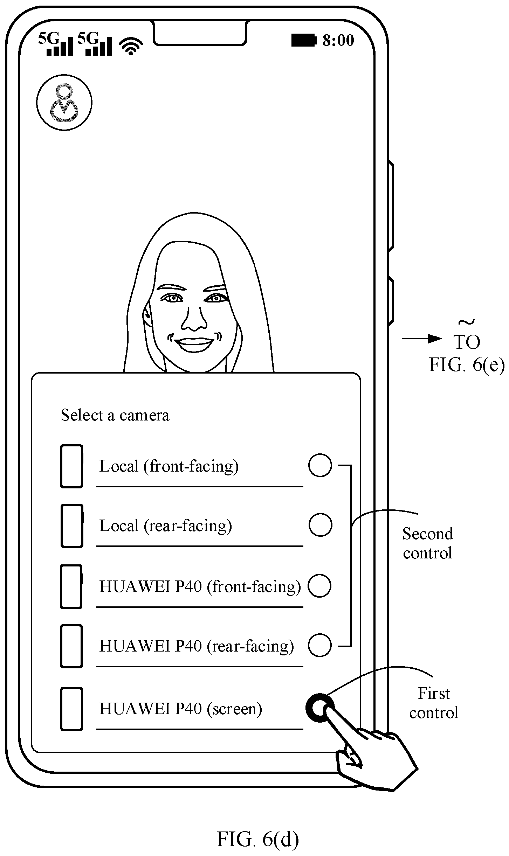

Refer to FIG. 6(d). For example, an authorized device is the second device and a device model of the second device is HUAWEI P40. A camera list may include cameras such as "Local (rear-facing)", "Local (front-facing)", "HUAWEI P40 (front-facing)", "HUAWEI P40 (rear-facing)", and "HUAWEI P40 (screen)". In this embodiment, controls used to select cameras in the camera list are a first control and a second control. The first control is used to select a camera (for example, the camera "HUAWEI P40 (screen)") corresponding to a remote screen camera module. In other words, the first control is used to control the second device to capture a screen image. The second control is used to select another camera (for example, the camera "Local (front-facing)" or the camera "HUAWEI P40 (front-facing)"). In other words, the second control is configured to control the camera of the first device or the camera of the second device to capture an image. The user may select one or more cameras in the camera list to capture an image according to a requirement.

In this embodiment, after detecting a selection operation performed by the user on the first control (for example, the camera "HUAWEI P40 (screen)"), the live streaming application considers that the first user operation is received.

S502: The live streaming application sends a first interface invocation instruction to a camera framework.

It can be learned from the foregoing descriptions that a camera interface is disposed in the camera framework. The camera interface may not only invoke the remote screen camera module, but also invoke a local camera module (including a local front-facing camera module and a local rear-facing camera module) and a remote camera module (including a remote front-facing camera module and a remote rear-facing camera module). After receiving the first user operation, the live streaming application sends the first interface invocation instruction to the camera framework.

In some embodiments, the first interface invocation instruction includes a camera interface identifier, a first camera identifier, and camera stream configuration information. The camera interface identifier is used to indicate that a target interface to be invoked by an application (for example, the live streaming application) is the camera interface. The first camera identifier is used to indicate that a target camera module to be invoked by the application (for example, the live streaming application) through the target interface is the remote screen camera module. The camera stream configuration information indicates parameters such as an image height, an image width, and a data format of a screen image required by the application (for example, the live streaming application). Based on the camera stream configuration information, the remote screen camera module may control to capture a screen image that meets a requirement of the first device.

S503: The camera framework invokes, by using the camera service, the remote screen camera module according to the first interface invocation instruction.

S504: The remote screen camera module sends a first working instruction to the camera agent module, where the first working instruction is used to indicate a camera agent module to capture a screen image of the second device.

In some embodiments, an ISP control module of the remote screen camera module generates the first working instruction based on an indication of the first interface invocation instruction, and sends the first working instruction to the camera agent module of the second device through a command sending module of a virtual sensor. It should be understood that the first working instruction also includes camera stream configuration information indicated by the live streaming application.

S505: The camera agent module sends a screen image capturing instruction to a screen capturing module according to the first working instruction.

In some embodiments, the camera agent module receives the first working instruction by using a command receiving module, and sends the first working instruction to a sensor implementation module. The sensor implementation module sends the screen image capturing instruction to the screen capturing module, to control the screen capturing module to work. With reference to the system for cross-device screen image capturing shown in FIG. 4, the screen image capturing instruction includes a start instruction sent by the camera switch to a media projection unit, and the camera stream configuration information sent by a camera stream configuration unit to a virtual display.

S506: The screen capturing module captures, according to the screen image capturing instruction, images of different layers displayed by the second device.

In some embodiments, the media projection unit captures, according to the start instruction, an image of each layer currently displayed by the second device. The virtual display renders, based on the camera stream configuration information, the image of each layer captured by the media projection unit.

It should be understood that the screen capturing module may capture screen images of a plurality of specifications based on the camera stream configuration information, for example, a low-definition preview screen image and a high-definition video screen image. After capturing the screen images of different specifications, the screen capturing module needs to send all the screen images to the screen rendering module for rendering.

S507: The screen capturing module sends the images of the different layers displayed by the second device to the screen rendering module.

S508: The screen rendering module renders the images of the different layers as a screen image actually displayed by the second device. It may be understood that the screen image obtained through rendering simultaneously includes the images of the different layers.

S509: The screen rendering module sequentially sends the screen image to the remote screen camera module through the screen capturing module and the camera agent module.

For example, with reference to the system for cross-device screen image capturing shown in FIG. 4, the screen rendering module first sends the screen image to a screen image output unit; the screen image output unit sends the screen image to a camera stream output unit; then, the camera stream output unit sends the screen image to a data sending module; and finally, the data sending module sends the screen image to the remote screen camera module of the first device. It should be understood that when the screen image is transmitted between units, modules, or devices, the screen image is transmitted in a form of a screen data stream.

S510: The remote screen camera module performs post-processing on the screen image.

With reference to FIG. 4, it can be learned that the remote screen camera module receives a data stream of the screen image (a screen data stream for short) of the second device by using a data receiving unit. After receiving the screen data stream, the remote screen camera module performs post-processing on the screen data stream based on the camera stream configuration information.

In some embodiments, if the screen data stream includes a plurality of types of data streams, the remote screen camera module may perform splitting processing on the screen data stream by using a splitting module. For example, in a case in which the screen data stream includes a preview data stream and a video data stream, the two data streams are divided into two independent data streams by using the splitting module. In addition, if the screen data stream of the second device includes only one type of data stream (for example, the video data stream), the remote screen camera module does not need to perform splitting processing on the screen data stream.

In some embodiments, the first device may further perform, by using a digital zoom module, digital zoom processing on the screen image carried in the screen data stream, for example, amplify a 480P screen image into a 1080P screen image. In addition, if an image size of a screen video stream captured by the second device meets a requirement of the first device, the first device does not need to perform digital zoom processing on the screen image in the screen video stream.

S511: The remote screen camera module sends a post-processed screen image to the live streaming application.

After capturing and processing the screen video stream of the second device, the remote screen camera module of the first device sends the screen video stream to a camera data receiving module of the live streaming application by using the camera service and the camera framework, so that the live streaming application further processes the screen video stream and then live streams the screen video stream.

According to the foregoing steps S501 to S511, the application on the first device may invoke, through the camera interface, the remote screen camera module to capture the screen image of the second device.

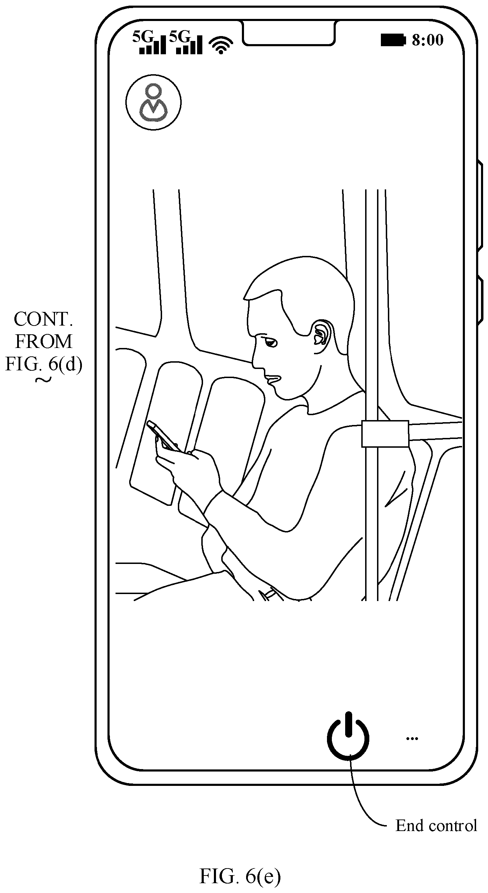

In addition, after receiving a third user operation, the live streaming application invokes the remote screen camera module through the camera interface to send a third working instruction to the camera agent module, where the third working instruction is used to indicate the camera agent module to stop capturing the screen image. For example, refer to FIG. 6(e). After detecting a selection operation performed by the user on an end control in the live streaming interface, the live streaming application considers that the third user operation is received, and the live streaming application controls the second device to stop capturing the screen image. Alternatively, after detecting that the user switches the currently working camera module from the remote screen camera module to a target camera module (for example, a local rear-facing camera module), the first device considers that the third user operation is received, and the live streaming application controls the remote screen camera module to stop working, and controls the local rear-facing camera module to start to capture an image.

It should be noted that the method for cross-device screen image capturing provided in this embodiment of this application is not only applicable to a cross-device screen live streaming scenario, but also applicable to application scenarios such as screen sharing. This is not limited in this embodiment.

In conclusion, in this embodiment, based on a remote camera control technology (also referred to as the distributed camera technology), a camera agent module on a second device is encapsulated into a remote screen camera module on a first device, and the second device may control, according to an instruction of the first device by using a camera agent module, a screen capturing module to capture a local screen image, and send the screen image to the first device. In other words, the second device can capture a local screen image under control of the first device without using a third-party streaming media application. This brings good user experience. In addition, when developing various live streaming applications, a software developer does not need to accordingly develop corresponding third-party streaming media applications. Therefore, costs and complexity of software development are reduced.

In a process in which the first device captures the screen image of the second device by using the remote screen camera module, the first device may further capture a video image by invoking a local camera module, and perform synthesis processing on the video image of the first device and the screen image of the second device to form a synthesized image.

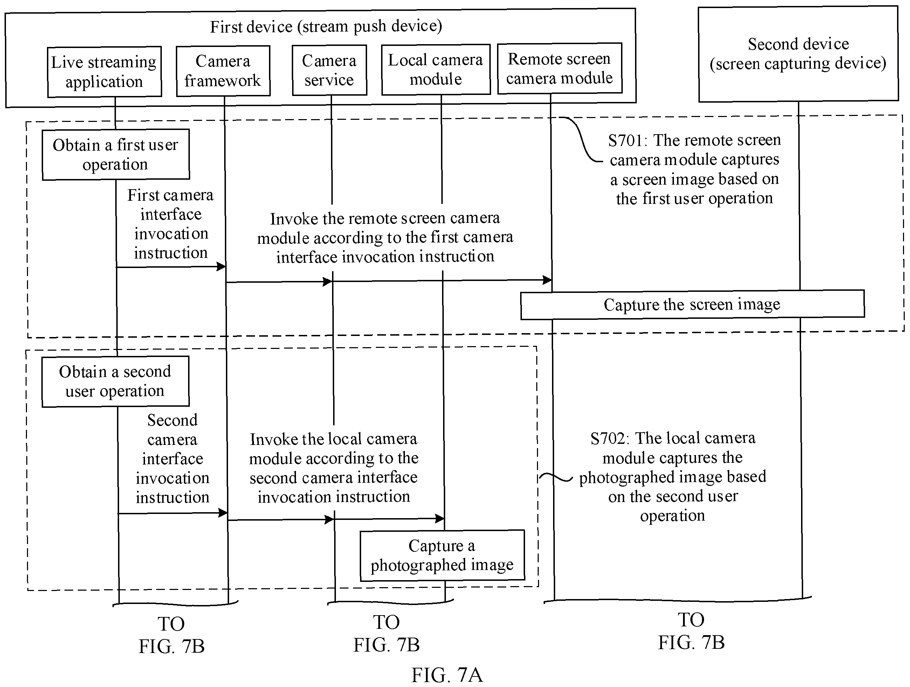

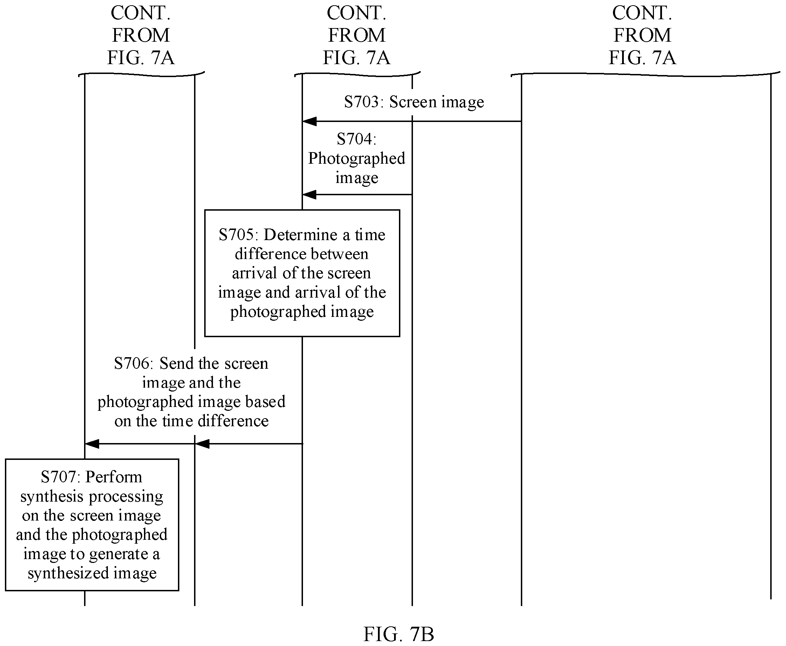

FIG. 7A and FIG. 7B are a schematic flowchart of multi-camera data collection according to an embodiment of this application, and relates to a process in which a first device captures a screen image of a second device and a photographed image of the first device by using both a remote screen camera module and a local camera module. Specifically, the following steps S701 to S707 are included.

S701: The remote screen camera module of the first device captures a screen image based on a first user operation.

In this embodiment, for details of S701, refer to the foregoing descriptions. Details are not described in this embodiment again.

S702: The local camera module of the first device captures a photographed image based on a second user operation.

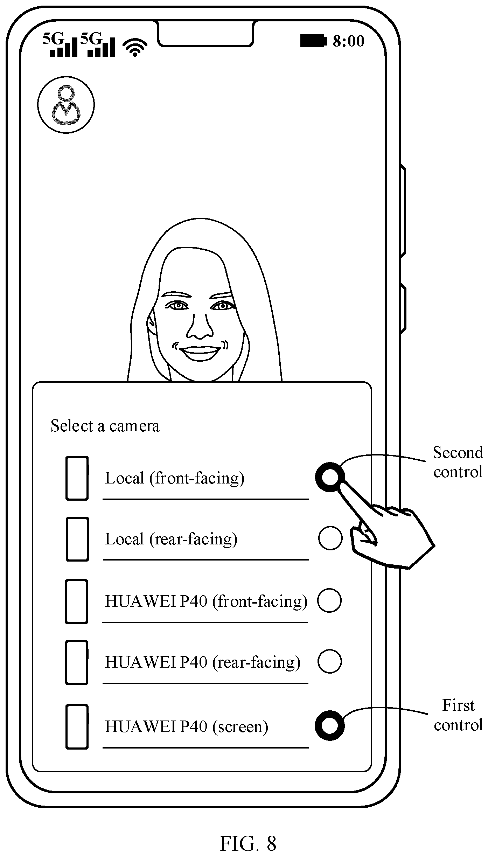

For example, refer to FIG. 8. After detecting a selection operation performed by a user on a second control (for example, a "Local (front-facing)" control), a live streaming application considers that the second user operation is received. After receiving the second user operation, the live streaming application sends a second interface invocation instruction to a camera framework. The second interface invoking instruction includes a camera interface identifier and a second camera identifier. The camera interface identifier is used to indicate that a target interface to be invoked by an application (for example, the live streaming application) is a camera interface. The second camera identifier is used to indicate that a target camera module to be invoked by the application (for example, the live streaming application) through the target interface is the local camera module. In other words, the second interface invocation instruction is used to indicate the camera framework to invoke, through a camera API, the local camera module to capture a photographed image by using a camera. It should be noted that when capturing the photographed image, a local camera of the first device can further record a voice of the user. In addition, in this embodiment, an image photographed by the electronic device with a camera is referred to as a photographed image.

S703: The remote screen camera module sends the screen image to a camera service.

After collecting data, an electronic device (including the first device and the second device) usually sets a timestamp for the data based on a local clock system, to identify a collection time of the data. Based on this, it can be learned that in this embodiment, because the photographed image is captured by the first device with the local camera module, a timestamp of the photographed image is set by the first device based on a local clock system. The screen image is captured by the second device under control of the first device. Therefore, a timestamp of the screen image is set by the second device based on a local clock system of the second device. Clock systems of different devices (for example, the first device and the second device) are usually not completely synchronized, in other words, the clock systems of different devices are usually different. The difference is mainly a difference in absolute times. For example, at an absolute moment 07:01:01, a time of the clock system of the first device may be 07:01:01.100, and a time of the clock system of the second device may be 07:01:01.300. Therefore, in this embodiment, timestamps of a screen image and a photographed image corresponding to a same absolute time are usually different.

After receiving the screen image and the photographed image that are sent by the first device, the live streaming application usually performs synthesis processing on the images with a same timestamp, to obtain a synthesized image. If a timestamp difference between the screen image and the photographed image that correspond to a same absolute time is large, the photographed image and the screen image in the synthesized image generated by the live streaming application are asynchronous. This affects live streaming viewing experience of viewers. Therefore, in some embodiments, the remote screen camera module may send the screen image to the camera service after performing clock synchronization on the screen image and the photographed image.

Essentially, clock synchronization performed by the first device on the photographed image and the screen image is data stream synchronization, that is, synchronization between a photographed data stream and a screen data stream. The photographed data stream includes photographed images of the first device at different moments, and the screen data stream includes screen images of the second device at different moments.

In a possible implementation, the remote screen camera module of the first device may synchronize the photographed data stream and the screen data stream based on a timestamp. For example, after receiving the screen data stream sent by the second device, the remote screen camera module of the first device may re-mark a timestamp on the screen data stream based on the clock system of the first device.

The screen data stream usually includes a plurality of frames of images, and the plurality of frames of images are usually sent next time by the second device at a same time interval. Therefore, the first device may first determine a timestamp of a first-frame screen image in the screen data stream, and then determine a timestamp of a subsequent screen image based on a time interval.

(1) Determining of the timestamp of the first-frame screen image

To clearly describe a manner of determining the timestamp of the first-frame screen image in the screen data stream, the following describes phases of a screen image capturing process and a delay generated in each phase.

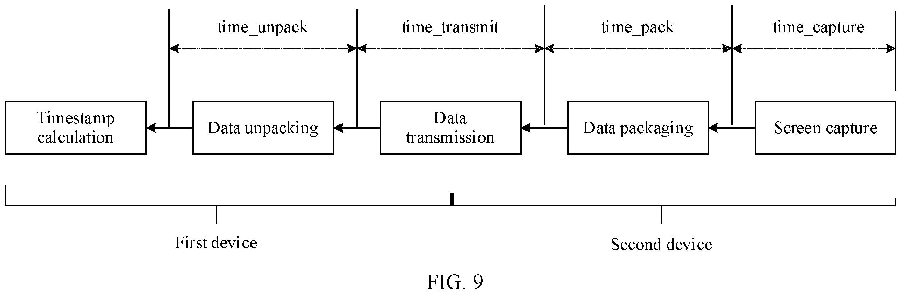

Refer to FIG. 9. In a process of capturing a screen image by the first device, the second device first performs a screen capture operation to obtain a screen image. Then the second device performs data packaging processing on the screen image. Then the second device sends the packed screen image to the first device. Finally, the screen image of the second device can be obtained only after the first device performs data packet parsing (data unpacking for short). These processes cause delays in receiving the screen image by the first device.

Based on the foregoing delays, the first electronic device may calculate the timestamp of the first-frame screen image according to the following formula:

$$\text{frame\_1\_timestamp}=\text{system\_time}-(\text{time\_unpack}+\text{time\_transmit}+\text{time\_pack}+\text{time\_capture})$$

In the formula, frame_1_timestamp is a timestamp that is of the first-frame screen image and that is re-determined by the first device;

system_time is a system time at which the first device completes unpacking the first-frame screen image;
time_capture is a delay generated when the second device captures a screen image;
time_pack is a delay generated when the second device performs data packaging on the screen image;
time_transmit is a delay of transmitting a data packet corresponding to the screen image from the second device to the first device; and
time_unpack is a delay generated when the first device performs data unpacking on the screen image.

It should be noted that time_capture, time_pack, time_transmit, and time_unpack may be empirical values obtained through a pre-test.

(2) Determining of a timestamp of a non-first-frame screen image

In the process of capturing the screen image by the first device, a delay (time_capture_p) actually generated when the second device captures the screen image, a delay (time_pack_p) actually generated when the second device performs data packaging on the screen image, and a delay (time_unpack_p) actually generated when the first device performs data unpacking on the screen image usually are not fully stable under the influence of an operation capability of the electronic device. In other words, jitter occurs. The actual data transmission delay (time _transmit_p) is affected by a network environment between devices, and is usually unstable. However, in the screen data stream, a time interval between adjacent screen image frames is fixed. If the first device calculates timestamps of other screen images in a manner similar to the calculation manner of the first-frame timestamp based on the actual delays (such as time_capture_p, time_pack_p, time_unpack_p, and time_transmit_p), obtained time intervals between screen image frames jitter due to differences of the foregoing delays. This finally affects user experience. Therefore, a new method is used for calculating a timestamp for a subsequent non-first frame, that is, the first-frame timestamp is used as a time standard, and a time interval between a subsequent frame and the first frame is added.
The timestamp of the non-first frame is calculated according to the following formula:

$$\text{frame\_n\_timestamp}=\text{frame\_1\_timestamp}+(\text{frame\_n\_remote\_timestamp}-\text{frame\_1\_remote\_timestamp})$$

In the formula, frame n_timestamp is a timestamp that is of a screen image of an $n^{th}$ frame and that is re-determined by the first device, where $n\neq1$;

frame_1_timestamp is a timestamp that is of the first-frame screen image and that is re-determined by the first device;
frame_n_remote_timestamp is a capturing timestamp of the screen image of the $n^{th}$ frame on the second device, where $n\neq1$; and
frame_1_remote_timestamp is a capturing timestamp of a screen image of a $1^{st}$ frame on the second device.

For example, n=100. A timestamp of a screen image of a $100^{th}$ frame is shown as follows:

$$\text{frame\_100\_timestamp}=\text{frame\_1\_timestamp}+(\text{frame\_100\_remote\_timestamp}-\text{frame\_1\_remote\_timestamp})$$

In the formula, frame_100_timestamp is the timestamp that is of the screen image of the $100^{th}$ frame and that is re-determined by the first device; and
frame_100_remote_timestamp is a capturing timestamp of the screen image of the $100^{th}$ frame on the second device.

Based on the foregoing processes, after updating the timestamp of the screen image based on the clock system of the first device, the remote screen camera module sends the screen image to the camera service.

S704: The local camera module sends the photographed image to the camera service.

S705: The camera service determines a time difference between arrival of the screen image and arrival of the photographed image at the camera service.

Because the photographed data stream is captured by the local camera module of the first device, and the screen data stream is sent by the second device, for the photographed image and the screen image at the same absolute moment, the photographed image first arrives at the camera service of the first device, and the screen image arrives at the camera service of the second device later. In this embodiment, a time difference between arrival of data streams of different camera modules (including the local camera module, the remote camera module, and the remote screen camera module of the first device) at the camera service is:

$$time\_diff=(system\_time1-camera1\_frame\_timestamp)-(system\_time2- camera2\_frame\_timestamp)$$

In the formula, time_diff is a time difference between a time at which data of camera1 (a first camera module) and a time at which data of camera2 (a second camera module) arrives at the camera service;

system_time1 is a system time at which a data stream of camera1 arrives at the camera service;
camera1_frame_timestamp is a timestamp of the data stream of camera1;
system _time2 is a system time at which a data stream of camera2 arrives at the camera service; and
camera2_frame_timestamp is a timestamp of the data stream of camera2.

For example, the first camera module is the remote screen camera module, and the second camera module is the local camera module. In the foregoing time difference calculation formula, system_time1-camera1_frame_timestamp is used to indicate duration from obtaining of the screen data stream by the second device to sending of the screen data stream to the camera service of the first device; and system_time2-camera2_frame_timestamp is used to indicate duration from obtaining of the photographed data stream by the local camera module of the first device to sending of the photographed data stream to the camera service of the first device. A difference between system_time1-camera1_frame_timestamp and system_time2-camera2_frame_timestamp is a difference between the duration from obtaining the screen data stream to arrival of the screen data stream at the camera service and the duration from obtaining the photographed data stream to arrival of the photographed data stream at the camera service.

It may be understood that, if the time difference time_diff between arrival of the screen image and arrival of the photographed image at the camera service is greater than 0, it indicates that a time for transmitting the screen data stream of the remote screen camera module is longer. For the screen image and the photographed image that are captured at the same absolute time, the photographed image arrives at the camera service earlier, and the screen image arrives at the camera service later. If the time difference time_diff is equal to 0, it indicates that the screen image and the photographed image that are captured at the same absolute time arrive at the camera service at the same time. If the time difference time_diff is smaller than 0, it indicates that, for the screen image and the photographed image that are captured at the same absolute time, the screen image arrives at the camera service earlier, and the photographed image arrives at the camera service later.

S706: The camera service sends the screen image and the photographed image to the live streaming application based on the time difference between arrival of the screen image and arrival of the photographed image at the camera service.

Based on the time difference between arrival of the screen image and arrival of the photographed image at the camera service, when the camera service outputs a data stream to the application (for example, the live streaming application), data synchronization can be implemented by delaying an earlier arrived data stream by time_diff for output. In other words, if time_diff>0, output of the data stream of the local camera module is delayed by time_diff. If time_diff≤0, output of the data stream of the remote screen camera module is delayed by time_diff.

For example, the first camera module is the remote screen camera module, and the second camera module is the local camera module of the first device. If the time at which the photographed data stream of the local camera module arrives at the camera service of the first device is 200 ms earlier than the time at which the screen data stream of the remote screen camera module arrives at the camera service (that is, time_diff=200 ms), after receiving the photographed data stream, the camera service needs to wait 200 ms for the screen data stream with the same timestamp to arrive at the camera service, and send both the photographed data stream and the screen data stream to the live streaming application. If the time at which the photographed data stream of the local camera module arrives at the camera service of the first device is 200 ms later than the time at which the screen data stream of the remote screen camera module arrives at the camera service (that is, time_diff=-200 ms), after receiving the screen data stream, the camera service needs to wait 200 ms for the photographed data stream with the same timestamp to arrive at the camera service, and send both the photographed data stream and the screen data stream to the live streaming application.

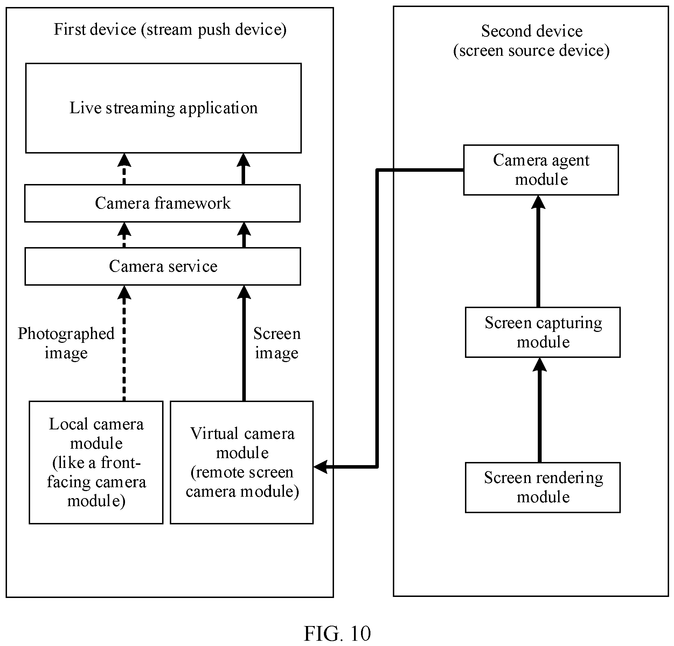

Refer to FIG. 10. It should be understood that because a transmission path of the screen image is usually longer, the photographed image captured by the local camera module usually arrives at the camera service earlier, and the screen image of the second device arrives at the camera service later. The camera service usually needs to delay sending of the photographed image to the live streaming application by time_diff.

S707: The live streaming application performs synthesis processing on the screen image and the photographed image to generate a synthesized image.

In a live streaming scenario, a live streaming application is usually live streaming based on the photographed image captured by the local camera module and the screen image of the second device captured by the remote screen camera module. Therefore, after obtaining the photographed image and the screen image of the second device, the live streaming application needs to send the two types of images to the live streaming application by using the camera service and the camera framework. The live streaming application performs synthesis processing to generate a synthesized image and live streams the synthesized image to viewers.

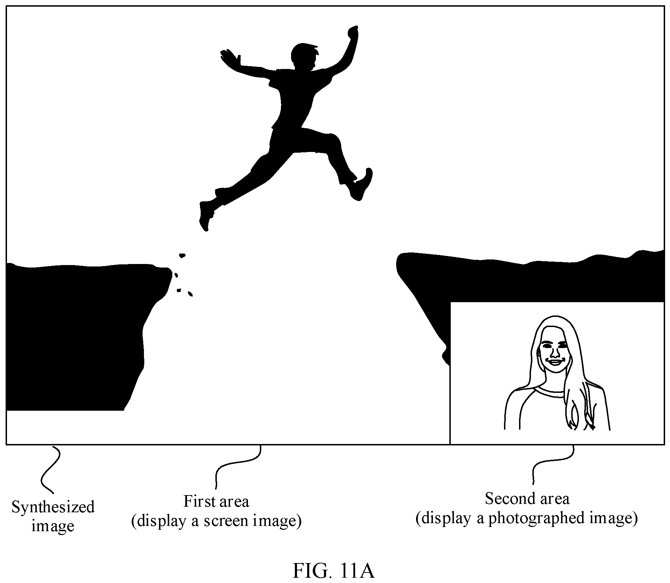

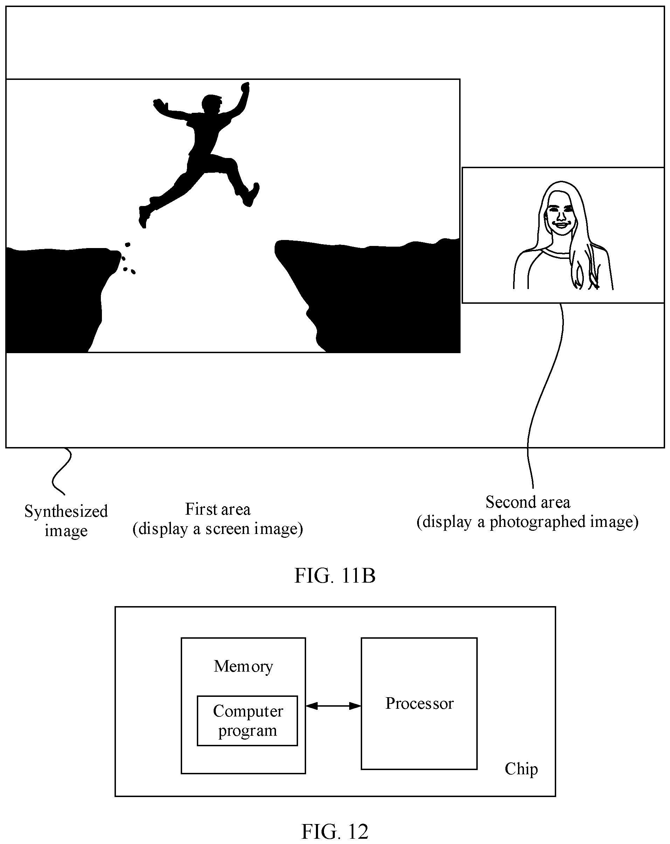

In this embodiment, the synthesized image includes a first area and a second area, where the first area is used to display the photographed image obtained by using the local camera module, and the second area is used to display the screen image of the second device. Positions of the first area and the second area in the synthesized image are not limited in this embodiment. For example, the second area may be displayed above the first area in a floating manner (for example, as shown in FIG. 11A), or the first area and the second area may not overlap (for example, as shown in FIG. 11B).

In conclusion, according to the method provided in this embodiment, the camera service of the first device may synchronously send the photographed data stream and the screen data stream to the live streaming application based on the timestamp. In this way, after receiving the data streams, the live streaming application may directly perform image synthesis based on the data streams rather than the timestamp. In this way, data processing efficiency of the live streaming application is improved.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

An embodiment of this application further provides a first device. The first device includes the live streaming application, the camera framework, the camera service, and the remote screen camera module that are mentioned in the foregoing embodiments. In addition, the first device is configured to perform the method for cross-device screen image capturing performed by the first device in the foregoing embodiments.

An embodiment of this application further provides a second device. The second device includes the camera agent module, the screen capturing module, and the screen rendering module that are mentioned in the foregoing embodiments. In addition, the second device is configured to perform the method for cross-device screen image capturing performed by the second device in the foregoing embodiments.

An embodiment of this application further provides a chip. Refer to FIG. 12. The chip includes a processor and a memory. The memory stores a computer program. When the computer program is executed by the processor, the method for cross-device screen image capturing performed by the first device or the second device in the foregoing embodiments is implemented.

An embodiment of this application further provides a computer-readable storage medium. The computer-readable storage medium stores a computer program. When the computer program is executed by a processor, the method for cross-device screen image capturing performed by the first device or the second device in the foregoing embodiments is implemented.

An embodiment of this application further provides a computer program product. The program product includes a computer program. When the computer program is run by an electronic device, the electronic device is enabled to implement the method for cross-device screen image capturing performed by the first device or the second device in the foregoing embodiments.

It should be understood that the processor mentioned in embodiments of this application may be a central processing unit (central processing unit, CPU), or the processor may be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be further understood that the memory mentioned in embodiments of this application may be a volatile memory or a nonvolatile memory, or may include a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative description, RAMs in a plurality of forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

In embodiments of this application, the framework division or module division is merely logical function division and may be other division in actual implementation. For example, a plurality of frameworks or modules may be combined or integrated into another system, or some features may be ignored or not performed.

In addition, functional modules in embodiments of this application may be integrated into one processing module, or may exist alone physically, or two or more modules are integrated into one module. The integrated module may be implemented in a form of hardware, or may be implemented in a form of a software functional module.

It may be clearly understood by a person skilled in the art that, for the purpose of convenient and brief description, for detailed working processes of the foregoing system, apparatus, and unit, reference should be made to the corresponding processes in the foregoing method embodiments. Details are not described herein again.

Reference to "an embodiment", "some embodiments", or the like described in the specification of this application indicates that one or more embodiments of this application include a specific feature, structure, or characteristic described with reference to the embodiments. Therefore, in this specification, statements, such as "in an embodiment", "in some embodiments", "in some other embodiments", and "in other embodiments", that appear at different places do not necessarily mean a same embodiment. Instead, the statements mean "one or more but not all of the embodiments", unless otherwise specifically emphasized. Terms "include", "contain", "have", and variants of the terms all mean "include but are not limited to", unless otherwise specifically emphasized.

The foregoing embodiments are merely intended to describe the technical solutions of this application, but are not to limit this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the spirit and scope of the technical solutions of embodiments of this application, and these modifications and replacements shall fall within the protection scope of this application.

## Claims

1.    A system for cross-device screen image capturing, comprising a first device and a second device, wherein a first application is installed and a remote screen camera module is disposed on the first device, and a camera agent module and a screen capturing module are disposed on the second device, wherein; 。

after receiving a first user operation, the first application invokes the remote screen camera module to send a first working instruction to the camera agent module;
the camera agent module obtains a screen image of the second device according to the first working instruction with the screen capturing module, and sends the screen image to the remote screen camera module; and
the remote screen camera module sends the screen image to the first application.

2.    The system according to claim 1, wherein that the remote screen camera module sends the screen image to the first application comprises:

the remote screen camera module performs, based on camera stream configuration information of the first application, splitting processing on a screen data stream corresponding to the screen image; and
the remote screen camera module sends the screen data stream on which splitting processing is performed to the first application.

3.    The system according to claim 2, wherein the camera stream configuration information comprises: an image width and an image height of the screen image, and/or a data format of the image.

4.    The system according to any one of claims 1 to 3, wherein that the remote screen camera module sends the screen image to the first application comprises:

the remote screen camera module zooms out or zooms in the screen image to obtain a zoomed-out or zoomed-in image; and
the remote screen camera module sends the zoomed-out or zoomed-in image to the first application.

5. The system according to any one of claims 1 to 4, wherein the first device is further provided with a local camera module;

the first application invokes the local camera module after receiving a second user operation; and
the local camera module captures a photographed image with a camera, and sends the photographed image to the first application.

6. The system according to claim 5, wherein
after receiving the screen image, the remote screen camera module updates a timestamp of a first-frame screen image based on a delay of the screen image and a system time of the first device at which the first device completes unpacking of the first-frame screen image.

7. The system according to claim 6, wherein the delay of the screen image comprises:

a delay generated when the second device captures the screen image;
a delay generated when the second device performs data packaging on the screen image;
a delay of transmitting the screen image from the second device to the first device; and
a delay generated when the first device performs data unpacking on the screen image.

8. The system according to claim 6 or 7, wherein
after receiving the screen image, the remote screen camera module further re-determines a timestamp of a screen image of an $n^{th}$ frame based on an updated timestamp of the first-frame screen image, a capturing timestamp of the screen image of the $n^{th}$ frame on the second device, and a capturing timestamp of the first-frame screen image on the second device, wherein n is a positive integer and $n\neq1$.

9. The system according to any one of claims 6 to 8, wherein the first device is further provided with a camera service, the remote screen camera module sends the screen image to the first application by using the camera service, and the local camera module sends the photographed image to the first application by using the camera service;

the camera service determines a time difference between arrival of the screen image at the camera service and arrival of the photographed image at the camera service, and an image that first arrives at the camera service; and
the camera service sends the screen image and the photographed image to the first application based on the time difference and the image that first arrives at the camera service.

10. The system according to claim 9, wherein that the camera service sends the screen image and the photographed image to the first application based on the time difference and the image that first arrives at the camera service comprises:

if the photographed image arrives at the camera service earlier than the screen image, the camera service delays sending of the photographed image to the first application by the time difference; and/or
if the screen image arrives at the camera service earlier than the photographed image, the camera service delays sending of the screen image to the first application by the time difference.

11. The system according to claim 10, wherein the time difference between arrival of the screen image at the camera service and arrival of the photographed image at the camera service is a difference between first duration and second duration, wherein
the first duration is duration from obtaining of the screen image by the second device to sending of the screen image to the camera service, and the second duration is duration from obtaining of the photographed image by the local camera module to sending of the photographed image to the camera service.

12. The system according to any one of claims 1 to 11, wherein

after receiving a third user operation, the first application invokes the remote screen camera module to send a third working instruction to the camera agent module, wherein the third working instruction is used to indicate the camera agent module to stop capturing the screen image.

13. A method for cross-device screen image capturing, applied to a first device and a second device, wherein a first application is installed and a remote screen camera module is disposed on the first device, and a camera agent module and a screen capturing module are disposed on the second device; and the method comprises:

after receiving a first user operation, invoking, by the first application, the remote screen camera module to send a first working instruction to the camera agent module;

obtaining, by the camera agent module, a screen image of the second device according to the first working instruction with the screen capturing module, and sending the screen image to the remote screen camera module; and

sending, by the remote screen camera module, the screen image to the first application.

14. The method according to claim 13, wherein the sending, by the remote screen camera module, the screen image to the first application comprises:

performing, by the remote screen camera module based on camera stream configuration information of the first application, splitting processing on a screen data stream corresponding to the screen image; and

sending, by the remote screen camera module, the screen data stream on which splitting processing is performed to the first application.

15. The method according to claim 14, wherein the camera stream configuration information comprises: an image width and an image height of the screen image, and/or a data format of the image.

16. The method according to any one of claims 13 to 15, wherein the sending, by the remote screen camera module, the screen image to the first application comprises:

zooming out or zooming in, by the remote screen camera module, the screen image to obtain a zoomed-out or zoomed-in image; and

sending, by the remote screen camera module, the zoomed-out or zoomed-in image to the first application.

17. The method according to any one of claims 13 to 16, wherein the first device is further provided with a local camera module, and the method further comprises:

invoking, by the first application, the local camera module after receiving a second user operation; and

capturing, by the local camera module, a photographed image with a camera, and sending the photographed image to the first application.

18. The method according to claim 17, wherein the method further comprises:
after receiving the screen image, updating, by the remote screen camera module, a timestamp of a first-frame screen image based on a delay of the screen image and a system time of the first device at which the first device completes unpacking of the first-frame screen image.

19. The method according to claim 18, wherein the delay of the screen image comprises:

a delay generated when the second device captures the screen image;

a delay generated when the second device performs data packaging on the screen image;

a delay of transmitting the screen image from the second device to the first device; and

a delay generated when the first device performs data unpacking on the screen image.

20. The method according to claim 18 or 19, wherein the method further comprises:
after receiving the screen image, further re-determining, by the remote screen camera module, a timestamp of a screen image of an $n^{th}$ frame based on an updated timestamp of the first-frame screen image, a capturing timestamp of the screen image of the $n^{th}$ frame on the second device, and a capturing timestamp of the first-frame screen image on the second device, wherein n is a positive integer and $n \neq 1$.

21. The method according to any one of claims 18 to 20, wherein the first device is further provided with a camera service, the remote screen camera module sends the screen image to the first application by using the camera service, and the local camera module sends the photographed image to the first application by using the camera service; and the method further comprises:

   determining, by the camera service, a time difference between arrival of the screen image at the camera service and arrival of the photographed image at the camera service, and an image that first arrives at the camera service; and
   sending, by the camera service, the screen image and the photographed image to the first application based on the time difference and the image that first arrives at the camera service.

22. The method according to claim 21, wherein the sending, by the camera service, the screen image and the photographed image to the first application based on the time difference and the image that first arrives at the camera service comprises:

   if the photographed image arrives at the camera service earlier than the screen image, delaying, by the camera service, sending of the photographed image to the first application by the time difference; and/or
   if the screen image arrives at the camera service earlier than the photographed image, delaying, by the camera service, sending of the screen image to the first application by the time difference.

23. The method according to claim 22, wherein the time difference between arrival of the screen image and arrival of the photographed image at the camera service is a difference between first duration and second duration, wherein the first duration is duration from obtaining of the screen image by the second device to sending of the screen image to the camera service, and the second duration is duration from obtaining of the photographed image by the local camera module to sending of the photographed image to the camera service.

24. The method according to any one of claims 13 to 23, wherein the method further comprises:
   after receiving a third user operation, invoking, by the first application, the remote screen camera module to send a third working instruction to the camera agent module, wherein the third working instruction is used to indicate the camera agent module to stop capturing the screen image.

Second device

Viewing devices

Screen image

First device

Cloud server

FIG. 1

Second device

Second streaming media
application

Screen capturing
instruction

Screen image

First device

First streaming media application

Stream push application

Live streaming application

FIG. 2

FIG. 3

EP 4 436 188 A1

**First device (stream push application)**

Live streaming application

Camera switch | Camera stream configuration module | Camera data receiving module

Camera framework

Camera service

Virtual camera module (remote screen camera module)

Remote screen camera ISP

ISP control module | Splitting module | Digital zoom module

Virtual sensor

Command sending module | Data receiving module

**Second device (screen source device)**

Camera agent module

Command receiving module

Data sending module

Sensor implementation module

Camera switch | Camera stream configuration unit | Camera stream output unit

Screen capturing module

Virtual camera ISP

Media projection unit (media projection) | Virtual display (virtual display) | Screen image output unit (virtual surface)

Screen rendering module

FIG. 4

EP 4 436 188 A1

| First device (stream push device) | | | | Second device (screen source device) | | |
|---|---|---|---|---|---|---|
| Live streaming application | Camera framework | Camera service | Remote screen camera module | Camera agent module | Screen capturing module | Screen rendering module |

S501: Obtain a first user operation

S502: First camera interface invocation instruction

S503: Invoke the remote screen camera module according to the first interface invocation instruction

S504: First working instruction

S505: Screen image capturing instruction

S506: Capture images of different layers displayed by the second device

TO FIG. 5B          TO FIG. 5B          TO FIG. 5B

FIG. 5A

CONT.
FROM
FIG. 5A

CONT.
FROM
FIG. 5A

CONT.
FROM
FIG. 5A

S507: Images
of different
layers

S508: Render the
images of different
layers as a screen
image

S509: Screen image

S510: Post-process the
screen image

S511: Post-processed screen image

FIG. 5B

TO
FIG. 6(b)

"More"
control

FIG. 6(a)

CONT.
FROM
FIG. 6(a)

TO
FIG. 6(c)

Basic functions

Camera
selection
control

Select a
camera

FIG. 6(b)

CONT.
FROM
FIG. 6(b)

Select a camera

Searching for available devices...

Make sure WLAN and Bluetooth are enabled on the other device, and adjust the discovery range in Settings>Super Device>Local

Cancel | Learn more

FIG. 6(c)

Select a camera

Local (front-facing)

Local (rear-facing)

HUAWEI P40 (front-facing)

HUAWEI P40 (rear-facing)

HUAWEI P40 (screen)

~
TO
FIG. 6(e)

Second control

First control

FIG. 6(d)

CONT.
FROM
FIG. 6(d)

End control

FIG. 6(e)

First device (stream push device)

| Live streaming application | Camera framework | Camera service | Local camera module | Remote screen camera module |

Second device (screen capturing device)

Obtain a first user operation

First camera interface invocation instruction

Invoke the remote screen camera module according to the first camera interface invocation instruction

S701: The remote screen camera module captures a screen image based on the first user operation

Capture the screen image

Obtain a second user operation

Second camera interface invocation instruction

Invoke the local camera module according to the second camera interface invocation instruction

S702: The local camera module captures the photographed image based on the second user operation

Capture a photographed image

TO
FIG. 7B

TO
FIG. 7B

TO
FIG. 7B

FIG. 7A

EP 4 436 188 A1

33

S703: Screen image

S704:
Photographed
image

S705: Determine a time
difference between
arrival of the screen
image and arrival of the
photographed image

S706: Send the screen
image and the
photographed image based
on the time difference

S707: Perform
synthesis processing
on the screen image
and the photographed
image to generate a
synthesized image

FIG. 7B

EP 4 436 188 A1

Select a camera

☐ Local (front-facing) ⬤ ————— Second control

☐ Local (rear-facing) ◯

☐ HUAWEI P40 (front-facing) ◯

☐ HUAWEI P40 (rear-facing) ◯

☐ HUAWEI P40 (screen) ⬤ ————— First control

FIG. 8

time_unpack | time_transmit | time_pack | time_capture

| Timestamp calculation | ← | Data unpacking | ← | Data transmission | ← | Data packaging | ← | Screen capture |

First device | Second device

FIG. 9

FIG. 10

Synthesized
image

First area
(display a screen image)

Second area
(display a photographed image)

FIG. 11A

Synthesized
image

First area
(display a screen image)

Second area
(display a photographed image)

FIG. 11B

FIG. 12

### INTERNATIONAL SEARCH REPORT

| International application No. |
| --- |
| **PCT/CN2022/139980** |

| **A.** | **CLASSIFICATION OF SUBJECT MATTER** |
| --- | --- |

H04N21/43(2011.01)i

According to International Patent Classification (IPC) or to both national classification and IPC

| **B.** | **FIELDS SEARCHED** |
| --- | --- |

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT; ENTXT; ENTXTC; CNKI; VEN; VCN: 远端, 设备, 第一, 第二, 主, 从, 多个, 跨, 屏幕, 采集, 录屏, 截屏, 时延, 延迟, 时间戳, 同步, 本地, 相机, remote, device, first, second, main, host, cooperat+, multiple, cross, screen, record+, shot, capture, delay, stamp, local, synchroniz+, camera

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| Y | CN 103257839 A (BAIDU ONLINE NETWORK TECHNOLOGY (BEIJING) CO., LTD.) 21 August 2013 (2013-08-21) description, paragraphs 0021-0065 | 1-5, 12-17, 24 |
| Y | CN 111083379 A (VIVO MOBILE COMMUNICATION (HANGZHOU) CO., LTD.) 28 April 2020 (2020-04-28) description, paragraphs 0030-0218 | 1-5, 12-17, 24 |
| A | US 2013138728 A1 (LG ELECTRONICS INC.) 30 May 2013 (2013-05-30) entire document | 1-24 |
| A | US 2015106730 A1 (FUTUREWEI TECHNOLOGIES, INC.) 16 April 2015 (2015-04-16) entire document | 1-24 |
| A | CN 113268211 A (VIVO MOBILE COMMUNICATION (HANGZHOU) CO., LTD.) 17 August 2021 (2021-08-17) entire document | 1-24 |

☐ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 February 2023** | **20 February 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/139980**

| Patent document cited in search report | | | Publication date (day/month/year) | Patent family member(s) | | | Publication date (day/month/year) |
|---|---|---|---|---|---|---|---|
| CN | 103257839 | A | 21 August 2013 | None | | | |
| CN | 111083379 | A | 28 April 2020 | WO | 2021136268 | A1 | 08 July 2021 |
| US | 2013138728 | A1 | 30 May 2013 | US | 9436650 | B2 | 06 September 2016 |
| US | 2015106730 | A1 | 16 April 2015 | EP | 3055761 | A1 | 17 August 2016 |
| | | | | EP | 3055761 | A4 | 02 November 2016 |
| | | | | EP | 3055761 | B1 | 14 August 2019 |
| | | | | WO | 2015054604 | A1 | 16 April 2015 |
| CN | 113268211 | A | 17 August 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111679635